**Europäisches Patentamt**

**European Patent Office**

**Office européen des brevets**

(19)

(11) Publication number : **0 453 202 B1**

(12)

# EUROPEAN PATENT SPECIFICATION

(45) Date of publication of patent specification :
27.07.94 Bulletin 94/30

(51) Int. Cl.$^5$ : **B01D 53/04**

(21) Application number : **91303287.6**

(22) Date of filing : **15.04.91**

(54) **Pre-purification of air for separation.**

(30) Priority : **20.04.90 US 513340**

(43) Date of publication of application :
**23.10.91 Bulletin 91/43**

(45) Publication of the grant of the patent :
**27.07.94 Bulletin 94/30**

(84) Designated Contracting States :
**BE DE ES FR GB IT NL**

(56) References cited :
**EP-A- 0 232 840**
**DD-B- 157 157**
**DE-A- 3 045 451**
**DE-A- 3 702 190**
**US-A- 3 981 698**

(73) Proprietor : **THE BOC GROUP, INC.**
**575 Mountain Avenue**
**Murray Hill New Jersey 07974 (US)**

(72) Inventor : **Jain, Ravi**
**48 Canterbury Court**
**Piscataway, New Jersey 08854 (US)**

(74) Representative : **Wickham, Michael et al**
**c/o Patent and Trademark Department**
**The BOC Group plc**
**Chertsey Road**
**Windlesham Surrey GU20 6HJ (GB)**

Jouve, 18, rue Saint-Denis, 75001 PARIS

## Description

This invention relates to the removal of unwanted gases from air prior to introduction into a conventional separation unit.

Conventional air separation units (ASUs) for the production of nitrogen and oxygen by the cryogenic separation of air basically comprise a distillation column or columns which operate at cryogenic temperatures. In consequence of these low temperatures, it is essential that water vapour and carbon dioxide be removed from the compressed air feed to an ASU. If this is not done, the low temperature sections of the ASU will freeze up making it necessary to halt production and warm the clogged sections to revaporise and remove the offending solid mass of frozen gases. This can be very costly. It is generally recognised that, in order to prevent freeze up of an ASU, the content of water vapour and carbon dioxide in the compressed air feed stream must be less than 0.1 ppm and 1.0 ppm, respectively.

A process and apparatus for the pre-purification of air need the capacity continuously and efficiently to meet, and preferably exceed, the above purity levels. This is particularly significant since the cost of the pre-purification contributes to the total cost of the product gases (namely one or more of oxygen, argon and nitrogen) of the ASU.

Current commercial methods for the pre-purification of air include reversing heat exchangers, temperature swing adsorption and pressure swing adsorption. The first two of these methods are described by Wilson et al in IOMA BROADCASTER, Jan.-Feb., 1984, pp 15-20.

Reversing heat exchangers remove water vapour and carbon dioxide by alternately freezing and evaporating them in their passages. Such systems require a large amount, i.e. 50% or more, of product gas for the cleaning, i.e. regenerating, of their passages. As a result of this significant disadvantage, combined with characteristic mechanical and noise problems, the use of reversing heat exchangers as a means of pre-purification has steadily declined over recent years.

In temperature swing adsorption (TSA) pre-purification, the impurities are removed at a lower temperature, typically at about 5°C, and regeneration is carried out at relatively elevated temperatures, e.g. from about 150°C-250°C. The amount of product gas required for regeneration is typically only about 12%-15%, a considerable improvement over reversing heat exchangers. However, TSA processes require both refrigeration units to chill the feed gas and heating units to heat the regeneration gas. They are, therefore, disadvantageous both in terms of capital costs and energy consumption.

Pressure swing adsorption (PSA) processes are an attractive alternative to TSA since both adsorption and regeneration are carried out at ambient temperature. PSA processes, in general, do require substantially more regeneration gas than TSA which is disadvantageous when high recovery of the regeneration gas is desired. This disadvantage can be substantially reduced, however, in a cryogenic plant which produces a substantial waste stream, e.g. about 40% of the feed. Such streams are ideal as regeneration gas since they are impurity free, i.e. free of water vapour and carbon dioxide, and would be vented in any event. However, although many pre-purification methodologies based on PSA have been proposed in the literature, few are actually being used commercially in consequence of high capital and energy costs associated therewith.

DE-A-3,045,451 (1981) desorbes a PSA pre-purification process which operates at 5°-10°C, 880 kPa (9 Kg/cm²) adsorption pressure and 98KPa (1 atm) regeneration pressure. Feed air is passed under pressure through a layer of 13X zeolite particles to remove the bulk of water vapour and carbon dioxide and then through a layer of activated alumina particles to remove the remaining low concentrations of carbon dioxide and water vapour. It is stated that the secondary layer of activated alumina can comprise from about 25%-80% of the combined volume of the bed. The arrangement of the adsorbent layers in this manner is claimed to reduce the formation of "cold spots" in the adsorbent beds. A similar process is discussed by Tomomura et al in KAGAKU KOGAKU RONBUNSHU, 13(5), (1987), pp 548-553. This latter process operates at 28°-35°C, 0.65 MPa adsorption pressure, and 0.11 MPa regeneration pressure, has a sieve specific product of 7.1 Sm³/min/m³ and a vent gas loss of 6.3% of the feed air. While such a loss would appear to be small, each one percent by volume of feed air lost in the vent represents, on the average, say, an annual operating loss in the order of ten thousand US dollars for a plant producing two hundred tons of nitrogen per day.

Japanese Kokai Patent Publication Sho 59-4414 (1984) describes a PSA pre-purification process in which separate beds and adsorbents are used for water vapour and carbon dioxide removal. A water vapour removal tower containing activated alumina or silica gel is regenerated by low pressure purge while a carbon dioxide removal tower containing 13X zeolite is regenerated by evacuation only without a purge. This process requires about 25% regeneration gas and, as a result, would be used in cryogenic processes having a high product recovery. Even if the cryogenic plant produces a substantial waste stream, such processes are expensive because of the power demands of the vacuum pump.

Japanese Patent Publication Sho 57-99316 (1982) describes a process wherein feed air, vent gas and purge gas are passed through a heat exchanger to thereby cause adsorption and desorption to take place at nearly the same temperature. The advantage of this process is stated to be a reduction in the required quantity of regeneration gas.

In the process described in Japanese Patent Publication Sho 55-95079 (1980), air is treated by PSA in two stages to remove water vapour and carbon dioxide, wherein dry air product from the PSA unit is used to purge the first stage and an impure nitrogen stream from the ASU is used to purge the second stage. This process is stated to be advantageous in terms of the overall nitrogen recovery.

EP-A-232,840 (1987) describes a pre-purification PSA process utilising activated alumina for removal of water vapour and a zeolite for carbon dioxide removal. It is stated that the use of activated alumina for water removal allows adsorption at a lower temperature and, therefore, carbon dioxide adsorption takes place at a lower temperature. Both adsorption and desorption take place at close to ambient temperature.

In the PSA cycle described in DE-A-3,702,190 (1988), at least 80% of the heat of adsorption is retained in the bed and is available for regeneration. The principle of retaining heat of adsorption in PSA beds is well established in the art.

The PSA air purification processes discussed above, with the exception of DE-A-3,045,451, utilise an initial bed or layer containing activated alumina or silica gel for water vapour removal and then a zeolite bed or layer for carbon dioxide removal. DE-A-3 045 451 discloses a process in which zeolite particles adsorb the bulk of the water vapour and carbon dioxide present and then a layer of activated alumina removes low residual concentrations of both impurities.

In accordance with the present invention, a means of efficiently removing water vapour and carbon dioxide has been found which is advantageous in terms of power consumption and vent gas loss.

According to the present invention there is provided a pressure swing adsorption process for the removal from air of water vapour and carbon dioxide impurities comprising, in cyclic sequence:

(a) introducing air under pressure into a first adsorptive bed to thereby to remove said impurities therefrom;

(b) at the conclusion of the removal step, ceasing introduction of air and venting said bed;

(c) introducing into said bed a purge gas free of said impurities to remove adsorbed impurities therefrom; and

(d) repressurising said bed, wherein said bed operates out of phase with a second bed so that one of them is producing product gas by step (a) while the other is being regenerated by steps (b) and (c) and said beds contain an initial layer of activated alumina which comprises from about 70% to 100% of the total bed volume with any remainder comprising a layer of a suitable zeolite to adsorb any residual water vapour and/or any residual carbon dioxide.

The term "initial layer" as utilised herein means the first layer contacted by the feed gas entering the bed. Preferably, the particles of adsorbent in the bed are not larger than about two mm in size. The subject process according to the invention preferably utilises a PSA cycle which facilitates the use of finely particulate adsorbents.

Although activated alumina is conventionally used to remove water vapour from air in pre-purification units, its use heretofore has been primarily as an initial layer or bed to remove water vapour followed by a second layer or bed of an adsorbent, such as zeolite, to remove carbon dioxide. DE-A-3,045,451, discussed above, discloses the use of the adsorbents in reverse order and states that the activated alumina is utilised only as a second layer to remove low concentrations of impurities which pass the initial layer of zeolite. It is also stated that the activated alumina can comprise from 20%-80% of the total bed. However, all examples given use equal quantities of each adsorbent.

In contrast to such teachings, the process according to the invention uses an adsorbent bed formed of an initial layer of activated alumina which comprises at least about 70%, preferably from about 80% to 100% by volume of the total adsorbent. Thus, the activated alumina may be the sole adsorbent present. A zeolite, such as 13X zeolite may be used as a second layer to remove residual water vapour and carbon dioxide. The use of activated alumina as the initial and predominant adsorbent to remove both water vapour and carbon dioxide in the incoming air stream is not suggested in the publications discussed above. The use of activated alumina as the only adsorbent layer to remove both impurities down to the specified levels hereinbefore is contrary to all prior methods of air pre-purification. In example of the process according to the invention wherein two layers of adsorbent are used, they may be in separate vessels or in a single vessel with a suitable barrier between them to prevent co-mingling. A single vessel is preferred.

"Activated alumina" is a commercially available substance. Those skilled in the art are aware that such substances typically are not pure alumina and will contain small percentages of other materials, such as ferric oxide, sodium oxide, silica and the like. Certain commercially available activated alumina products are manufactured to contain specified amounts of these and other materials which enhance their activity or confer other beneficial properties thereupon. A particularly preferred activated alumina for use in the present invention is manufactured by Alcoa, Inc., Pittsburgh, Pa. under the designation product code H-152. In contrast to conventional activated alumina which typically contains less than 1% of silica, this material contains about 10% by weight of silica and each particle contains silica. Any of the various zeolites recognised as being useful for the adsorption of carbon dioxide may be used in the process according to the invention, 13X zeolite being particularly preferred.

The use of activated alumina as the predominant adsorbent is advantageous in that the alumina adsorbs significantly less air than zeolites, such as 13X zeolite. Our experiments carried out at a pressure of 0.97 MPa (140 psia) and 25°C suggest that a unit volume of 13X zeolite adsorbs about three times as much air as a comparable unit volume of activated alumina. Therefore, as a result of activated alumina being the predominant adsorbent in the subject process, the vent gas loss is reduced by 50% or more, which represents a considerable saving in energy consumed. In a preferred embodiment of this invention, the adsorptive beds contain 100% activated alumina.

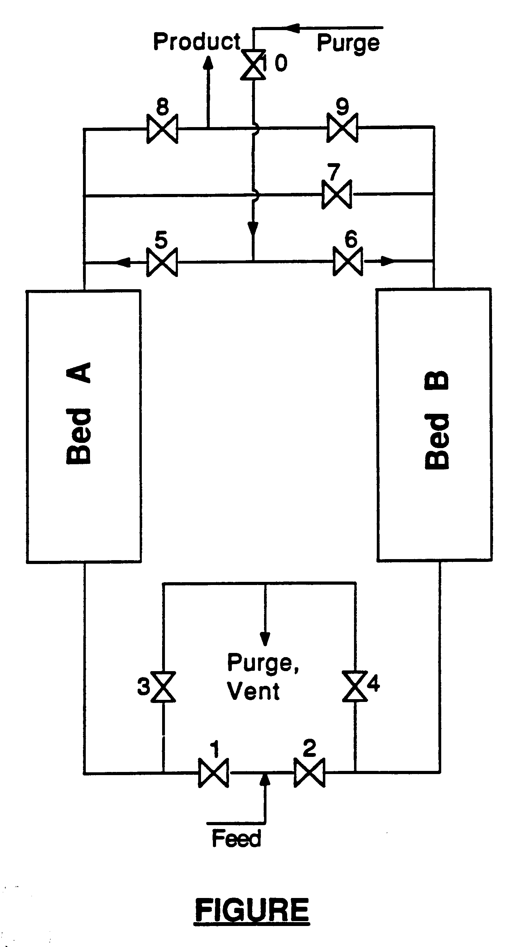

The use of at least 70% by volume activated alumina in the adsorbent bed also substantially eliminates the "cold zone" that is known to form in a bed of zeolite during desorption. As mentioned above, zeolite adsorbs a substantially larger quantity of air than does activated alumina during the production stage of a PSA cycle. Also, the heat of adsorption of air components on zeolites is greater than on activated alumina. During the desorption or regeneration stage of zeolites, adsorbed air is very rapidly desorbed in an adiabatic manner, thus creating an acute drop in temperature. FIGURE 3 of DE-A-3 045 451 shows that a temperature drop of about 20°C in the zeolite layer during desorption is possible for adsorption at 10°C. DE-A-3 702 290 discloses that, in a process utilising activated alumina or silica gel for water vapour removal and 13X zeolite for carbon dioxide removal, desorption takes place at about 30°C lower than adsorption. This, again, is due to a formation of the cold zone during rapid desorption.

When desorption occurs at a temperature much lower than adsorption, the amount of regeneration gas required for desorption is much higher than when desorption and adsorption occur at nearly the same temperature. A large temperature difference between adsorption and desorption also leads to inefficient regeneration of the adsorbent bed, thereby requiring the use of larger amounts of adsorbents. In addition, the effect of the "cold zone" becomes more severe with time and it can both increase in size and move within the bed. All of these factors can lead to operational instabilities. It will be appreciated by those skilled in the art that, because of the factors cited above, the sharp drop in temperature associated with the use of a predominate amount of zeolite is undesirable both in terms of cost and operational considerations. Any reduction in the amount of zeolite used in the bed, as practised in this invention, is expected to reduce the detrimental effects of cold zone formation.

The particles of adsorbent, particularly zeolite when present, used in the process of the present invention are preferably smaller than those conventionally used in PSA processes. Specifically, the particles of adsorbent are preferably smaller than about 2mm, preferably from about 0.4 to 1.8 mm, and most preferably, from about 0.6 mm to 1.6 mm. Experiments carried out at 23°C and 724 KPa (105 psia) utilising an absorbent bed containing 75% by volume of a first adsorbent layer of commercial 3.0 mm activated alumina and the remainder a second layer of 0.4-0.8 mm 13X zeolite gave a "sieve specific product" of 28.5 Sm³/min/m³ of adsorbent and a vent gas loss of 1.7% of feed. The sieve specific product is approximately four times that produced by the process described by Tomomura et al., discussed above, while the vent gas loss is less than about one-third of the vent gas loss in that process.

It is well known to those skilled in the art that smaller particles of adsorbent have smaller mass transfer zones which result in a more effective use of the bed in terms of its equilibrium capacity. Therefore, the use of finely particulate adsorbent in the process according to the invention permits the use of smaller bed volumes. Reduction of the bed volume represents an immediate savings in capital costs for equipment as those skilled in the art will readily appreciate. Further, a reduced bed volume combined with the fact that the majority of the adsorbent used is activated alumina which adsorbs much less air than zeolite results in a significant reduction in vent gas loss during regeneration. Therefore, the present process can operate at a vent gas loss as low as 2% by volume. Viewed in terms of the value of a one percent vent gas loss stated hereinabove, it is readily apparent that the process of this invention possesses significant economic advantages over currently used processes.

The use of such small particles in both zeolite and activated alumina layers, particularly in the former, is preferred in the process according to the invention. With smaller zeolite particle size, the amount of zeolite which one needs to employ to form a product gas of given purity can be reduced. Since zeolites adsorb much more air than activated alumina, the proportionate decrease in the vent gas loss is significantly larger than it would be for a decrease in the equivalent amount (by volume) of activated alumina. Also, since a smaller amount of air is desorbed during regeneration when smaller size zeolites are used, the severity of cold zone formation is further reduced. This allows an even better regeneration of the bed, reducing both the amount of adsorbent

4

required and the amount of purge gas required.

A PSA process according to the present invention using finely particulate adsorbent preferably does not have a bed pressure equalisation step so as to avoid the high velocity gas flow normally encountered in such a step. Further, all steps other than production, preferably employ flow countercurrent to that of the gas flow during production. This is also advantageous as adsorbent beds are usually situated so that production flow is upward and higher velocity steps are downward flow. Since the upward flow during production is fairly steady, beds can be easily designed to prevent fluidisation during production. Fluidisation is generally not a problem for the higher velocity downward flow steps. Conventional bed design techniques may be used to prevent attrition of adsorbent particles in downward flow as well. Those skilled in the art will appreciate that the PSA process according to the invention is able to avoid abrupt shifting of the particles of adsorbent in the adsorptive bed, thereby preventing fluidising of the bed with degradation of its usefulness.

The process according to the invention will now be described by way of example with reference to the accompanying drawing which is a schematic flow diagram illustrating a pressure swing adsorption apparatus for purifying air upstream of a plant (not shown) that separates the main components of the air by rectification at cryogenic temperatures.

Referring to the drawing, feed gas, i.e. air, under pressure, typically from about 517 KPa (75 psia) to about 1.14 MPa (165 psia), is admitted alternately to adsorptive beds A and B by the opening and closing of valves 1 and 2. Beds A and B operate out of phase so that one is producing while the other is undergoing regeneration. While the invention is described with regard to a pair of adsorptive beds A and B, it can be carried out with three or more beds operating out of phase or with multiple pairs of beds as is recognised by those skilled in the art.

When Bed A is in the production step of the cycle, valve 1 is open, valves 2 and 3 are in closed position and air is forced through the particulate adsorbent contained therein under pressure. Valves 5, 7 and 9 are also in closed positions and valve 8 open so that air substantially free of water vapour and carbon dioxide flows out of the system through the line marked "product". The product stream, which contains less than 0.1 ppm of water vapour and 1.0 ppm of carbon dioxide, is introduced into a cryogenic air separation unit (ASU), not shown.

At the completion of this production step of the cycle, valve 7 is opened to repressurise Bed B by backfilling from Bed A, then valves 1 and 8 are closed and valve 3 opened to allow Bed A to vent to the atmosphere. The duration of the production cycle is insufficient to permit a front of impurities to flow out of the adsorptive bed, i.e. the bed does not reach its adsorptive capacity. This is readily determined by conventional procedures well known to those of ordinary skill in the art. The determination and adjustment of the production step automatically with reference to the water vapour and carbon dioxide content of the incoming air feed using conventional sensing and regulating apparatus is likewise well known to those of ordinary skill in the art. It is a distinct advantage of the subject process that the amount of gas lost to the atmosphere during the venting step typically represents less than three percent of the volume of feed gas.

At the conclusion of the venting step, valves 5 and 10 are opened and purge gas is admitted to Bed A in a direction countercurrent to the flow therethrough during production. The purge exits the bed through the open valve 3. The purge gas is taken from a source whose levels of water vapour and carbon dioxide are less than those of the product gas of the PSA system. The source can be a product gas or, preferably, a high nitrogen content waste gas of the ASU which is readily available under pressure. The purge step is of sufficient duration to desorb the adsorbed impurities and remove them from the bed. The statements made above concerning the monitoring and determining of the production step apply equally to the purge step.

At the conclusion of the purge step, valves 3, 5 and 10 are closed and valve 7 opened to repressurise Bed A by backfilling with product gas being produced in Bed B. During the backfill step, valve 9 remains open and product gas from Bed B continues to be withdrawn from the system.

Upon the completion of the backfill step, valve 7 is closed and valves 1 and 8 opened to begin another cycle. Bed B is operating out of phase with Bed A so that one is undergoing regeneration, i.e. venting and purging, while the other is producing product. A typical cycle for a two-bed system is shown in the Table I.

## TABLE I

### Typical PSA Cycle
### (20 Minute Cycle)

| Bed A | Valves Open | Bed B | Time (Sec.) |
|---|---|---|---|
| Backfill from Bed B | 2, 7, 9 | Produce, backfill Bed A | 60 |
| Produce | 1, 4, 8 | Vent to Atmosphere | 30 |
| Produce | 1, 4, 6, 8, 10 | Purge | 510 |
| Produce, backfill Bed B | 1, 7 , 8 | Backfill from Bed A | 60 |
| Vent to Atmosphere | 2, 3, 9 | Produce | 30 |
| Purge | 2, 3, 5, 9, 10 | Produce | 510 |

This PSA cycle has been shown to be particularly advantageous for the finely particulate adsorbent in the adsorptive beds as described above. Certain modifications of the process described with reference to the Figure may be made without departing from the scope of the subject invention. For example, both the purge and vent steps can be carried out under vacuum using conventional equipment. Also, if desired, repressurisation of the beds can be carried out using feed gas instead of product gas. Overall, the subject process provides a significant improvement in pre-purification of air for an ASU in terms of capital cost and efficiency of operation.

The following Examples further illustrate this invention, it being understood that the invention is in no way intended to be limited to the details described therein.

EXAMPLES 1 to 5

Air was purified to remove water vapour and carbon dioxide utilising an apparatus as shown in the drawing, and a cycle as shown in Table I. The beds contained only a form of activated alumina commercially available from Alcoa, Inc., Pittsburgh, Pa. Each particle of this activated alumina (product code H-152) contains about 10% $SiO_2$ by weight. The particle size of the activated alumina was about 3.0 mm. The bed contained about 1.2 Kg (2.6 lb) of activated alumina per 100 mm of bed depth. The adsorption was carried out at a pressure of 965 KPa (140 psia) with water saturated air (at adsorption temperature) containing about 350 ppm carbon dioxide. The adsorption temperatures are given in table II. Nitrogen gas free of water and carbon dioxide was used as the purge. The amounts of activated alumina needed to reduce the carbon dioxide content in the product to 1.0 ppm were experimentally determined through measurement of carbon dioxide concentration profiles in the bed and are given in Table II. The amounts of purge gas, vent gas loss and the sieve specific product are also given. The purge gas was nitrogen purified to remove water vapour and carbon dioxide.

TABLE II

| Exam. No. | Adsorp. Temp. (°C) | Carbon Dioxide Conc. at 785 mm (ppm) | Purge as % of Feed | Vent Loss as % of Feed | Bed Height (mm) | Sieve Sp. Prod. $(Sm^3/min/m^3)$ |
|---|---|---|---|---|---|---|
| 1 | 32.5 | 55.0 | 45.0 | 1.98 | 1260 | 17.6 |
| 2 | 32.5 | 120.0 | 38.0 | 2.10 | 1360 | 16.4 |
| 3 | 32.5 | 160.0 | 30.0 | 2.43 | 1585 | 14.2 |
| 4 | 25.0 | 150.0 | 42.0 | 1.95 | 1340 | 17.5 |
| 5 | 25.0 | 63.0 | 30.0 | 2.35 | 1585 | 14.6 |

It can be seen that when only activated alumina is used to remove both carbon dioxide and water vapour, very low vent gas losses, as low as 2%, can be obtained which, as stated earlier, represent substantial power savings. Also purge amounts of as low as 30% of feed can be used. The sieve specific product for the all activated alumina design is over twice that of the commercial process described by Tomomura et al. and discussed above.

Temperature profile measurements for the all activated alumina design indicated a maximum temperature difference of less than 5°C between the adsorption and desorption portions of the cycle. The cold zone formation was virtually eliminated because of the much smaller amount of air adsorbed on activated alumina as would be on zeolite. The improved adsorbent regeneration, due to the elimination of the cold zone, is partly responsible for the overall good performance.

## EXAMPLES 6 TO 8

Experiments were carried out with two beds containing 9.3 Kg (20.6 lbs) of a commercially available activated alumina having an average particle size of 1.5 mm. The height of the activated alumina layer was 785 mm. The vessel contained a second layer of a commercially available 13X zeolite having an average particle size of about 1.5 mm. The amount of 13X zeolite used was about 0.94 Kg (2.1 lbs) per 100 mm of bed height. The carbon dioxide concentration profile in the bed was measured using an Infrared Analyser and the amounts of 13X zeolite required to obtain 1.0 ppm carbon dioxide concentration at the vessel outlet were experimentally determined. The heights of the 13X zeolite layer and the volume % of 13X zeolite in the bed are given in Table III.

The adsorption was carried out at a pressure of 965 KPa (140 psia), a temperature of 32.5°C with water saturated feed air containing about 350 ppm carbon dioxide. The PSA cycle and apparatus were as described with reference to Examples 1 to 5.

For comparison purposes, a similar experiment was carried out using adsorption beds containing less than 70% by volume of activated alumina with other factors remaining essentially constant. The results therefor are likewise given in Table III.

TABLE III

| Exam. No. | Carbon Dioxide Conc. at 785 mm (ppm) | Purge as % of Feed | Vent Loss as % of Feed | Total Height (mm) | Activated Alumina Volume (%) | Sieve Sp. Prod. $(Sm^3/min/m^3)$ |
|---|---|---|---|---|---|---|
| 6 | 3.0 | 63.0 | 1.80 | 910.0 | 86.3 | 20.2 |
| 7 | 5.0 | 51.0 | 2.07 | 970.0 | 80.9 | 22.5 |
| 8 | 18.0 | 42.0 | 3.22 | 1210.0 | 64.9 | 18.5 |

It can be seen that activated alumina can remove a substantial amount of carbon dioxide. In Examples 6 and 7, the amount of carbon dioxide was reduced from about 350 ppm to between 3 and 5 ppm in the activated alumina section alone. It can also be seen that as the amount of 13X zeolite in the bed is reduced (through the use of higher amounts of purge in these Examples), the amount of vent gas loss decreases. This is a direct result of higher amounts of air absorbed in 13X zeolite sieve. In Example 8 which utilises less than 70% activated alumina, the vent gas loss is over 50% more than the vent gas loss for Examples 6 and 7 which will result in higher operating costs. The sieve specific product for Example 8 is also lower than those of Examples 6 and 7.

A further advantage of the present process can be seen by comparing Examples 1-3 with Examples 6-8. The carbon dioxide concentrations at 785 mm in Examples 1-3 which use 3.0 mm activated alumina are between 55 and 160 ppm. Examples 6-8 which utilised 1.5 mm activated alumina, produced carbon dioxide levels of 3-18 ppm at the same bed height (785 mm). This significant difference is due to the shorter mass transfer zones associated with smaller particles.

## Claims

1. A pressure swing adsorption process for the removal from air of water vapour and carbon dioxide impurities comprising, in cyclic sequence:
   (a) introducing air under pressure into a first adsorptive bed to thereby to remove said impurities therefrom;
   (b) at the conclusion of the removal step, ceasing introduction of air and venting said bed;
   (c) introducing into said bed a purge gas free of said impurities to remove adsorbed impurities therefrom; and
   (d) repressurising said bed, wherein said bed operates out of phase with a second bed so that one of them is producing product gas by step (a) while the other is being regenerated by steps (b) and (c) and said beds contain an initial layer of activated alumina with any remainder comprising a layer of a suitable zeolite to adsorb any residual water vapour and/or any residual carbon dioxide, characterised in that the layer of activated alumina comprises from about 70% to 100% of the total bed volume.

2. A process in accordance with Claim 1, wherein the activated alumina particles contain silica.

3. A process in accordance with any one of the preceding claims, wherein the flow of gas in steps (b), (c) and (d) is countercurrent to the flow of gas in step (a).

4. A process in accordance with any one of the preceding claims, wherein the particles of at least the zeolite in said beds are between 0.4 and 1.8 mm in size.

5. A process in accordance with Claim 4, wherein the particles of at least the zeolite in said beds are between 0.6 mm and 1.6 mm in size.

6. A process in accordance with Claim 4, wherein all adsorbent particles in said beds are between 0.4 mm and 1.8 mm in size.

7. A process in accordance with Claim 5, wherein all adsorbent particles in the bed are between about 0.6 mm and 1.6 mm.

8. A process in accordance with any one of the preceding claims, wherein the product gas is introduced into a cryogenic air separation unit.

9. A process in accordance with any one of the preceding claims, wherein the purge gas is nitrogen-enriched waste or product gas from said unit.

## Patentansprüche

1. Druckschwingungsadsorptionsprozeß zu dem Entfernen von Wasserdampf- und Kohlendioxidverunreinigungen aus Luft, der in zyklischer Abfolge umfaßt:
   (a) die Zugabe von Luft unter Druck in ein erstes adsorbierendes Bett um dabei die Verunreinigungen daraus zu entfernen;

(b) bei der Beendigung des Entfernschrittes die Zugabe von Luft zu beenden und das Bett zu entlüften;

(c) in das Bett ein Spülgas zuzugeben, das frei von den Verunreinigungen ist, um adsorbierte Verunreinigungen daraus zu entfernen; und

(d) das Bett wieder unter Druck zu setzen, wobei das Bett außer Takt mit einem zweiten Bett arbeitet, so daß eines von ihnen Produktgas im Schritt (a) erzeugt, während das andere in den Schritten (b) und (c) regeneriert wird, und wobei diese Betten eine Anfangsschicht von aktivierter Tonerde enthalten, und alles übrige eine Schicht von geeignetem Zeolit umfaßt, um jeglichen restlichen Wasserdampf und/oder jegliches restliche Kohlendioxid zu adsorbieren,

dadurch gekennzeichnet, daß die Schicht von aktivierter Tonerde etwa von 70% bis 100% des Gesamtbettvolumens umfaßt.

2. Prozeß nach Anspruch 1, in dem die aktivierten Tonerdepartikel Silika (Kieselerde) enthalten.

3. Prozeß nach einem der vorhergehenden Ansprüche, in dem der Fluß des Gases in den Schritten (b), (c) und (d) dem Fluß des Gases in Schritt (a) entgegenfließend ist.

4. Prozeß nach einem der vorhergehenden Ansprüche, in dem zumindest die Partikel von Zeolit in den Betten eine Größe zwischen 0,4 und 1,8 mm aufweisen.

5. Prozeß nach Anspruch 4, in dem zumindest die Partikel von Zeolit in den Betten eine Größe zwischen 0,6 mm und 1,6 mm aufweisen.

6. Prozeß nach Anspruch 4, in dem alle Adsorberpartikel in den Betten eine Größe zwischen 0,4 mm und 1,8 mm aufweisen.

7. Prozeß nach Anspruch 5, in dem alle Adsorberpartikel in dem Bett zwischen 0,6 mm und 1,6 mm sind.

8. Prozeß nach einem der vorhergehenden Ansprüche, in dem das Produktgas einer cryogenen Lufttrenneinheit zugeführt wird.

9. Prozeß nach einem der vorhergehenden Ansprüche, in dem das Spülgas ein stickstoffangereichertes Abfall- oder Produktgas aus dieser Einheit ist.

**Revendications**

1. Procédé d'adsorption avec variation cyclique de la pression pour enlever de l'air les impuretés que sont la vapeur d'eau et le dioxyde de carbone, ce procédé comprenant, en séquence de succession cyclique :

(a) l'introduction d'air sous pression dans un premier lit adsorbant pour enlever ainsi lesdites impuretés de l'air ;

(b) à la fin de l'étape d'enlèvement, la cessation de l'introduction d'air et la mise dudit lit en contact par un évent avec l'extérieur ;

(c) l'introduction, dans ledit lit, d'un gaz de purge, dépourvu desdites impuretés, pour enlever de ce lit les impuretés adsorbées ; et

(d) la remise sous pression à nouveau dudit lit, ledit lit fonctionnant en décalage de phase avec un second lit, de façon que l'un de ces lits est en train de produire du gaz, comme produit, par l'étape (a) pendant que l'autre lit est soumis à régénération dans les étapes (b) et (c), et lesdits lits contiennent une couche initiale d'alumine activée, le reste éventuel comprenant une couche d'une zéolite convenable pour adsorber la vapeur d'eau résiduelle éventuelle et/ou tout le dioxyde de carbone résiduel éventuellement présent, procédé caractérisé en ce que la couche d'alumine activée représente environ 70 % à 100 % du volume total des lits.

2. Procédé selon la revendication 1, dans lequel les particules d'alumine activée contiennent de la silice.

3. Procédé selon l'une quelconque des revendications précédentes, dans lequel l'écoulement du gaz s'effectue, dans les étapes (b), (c) et (d), à contre-courant de l'écoulement du gaz dans l'étape (a).

4. Procédé selon l'une quelconque des revendications précédentes, dans lequel les particules d'au moins la zéolite présente dans lesdits lits ont une taille comprise entre 0,4 et 1,8 mm.

5. Procédé selon la revendication 4, dans lequel les particules d'au moins la zéolite présente dans lesdits lits ont une taille comprise entre 0,6 mm et 1,6 mm.

6. Procédé selon la revendication 4, dans lequel toutes les particules adsorbantes présentes dans lesdits lits ont une taille comprise entre 0,4 mm et 1,8 mm.

7. Procédé selon la revendication 5, dans lequel toutes les particules adsorbantes présentes dans le lit ont une taille comprise entre environ 0,6 mm et 1,6 mm.

8. Procédé selon l'une quelconque des revendications précédentes, dans lequel le gaz produit est introduit dans une unité de séparation cryogénique des constituants de l'air.

9. Procédé selon l'une quelconque des revendications précédentes, dans lequel le gaz de purge est du gaz résiduaire enrichi en azote ou bien du gaz constituant un produit provenant de ladite unité.

**FIGURE**